# EUROPEAN PATENT APPLICATION

(11) **EP 1 466 545 A1**
(43) Date of publication of application: **13.10.2004**
(21) Application number: 04251452.1
(22) Date of filing: 12.03.2004
(51) Int. Cl.: A47J 27/58

(54) **Cookware and cookware lid**

(30) Priority: 09.04.2003 US 461138 P; 28.04.2003 US 424146
(71) Applicant: CALPHALON CORPORATION, Freeport, IL 61032 (US)
(72) Inventor: Seiple, Shane, Perrysburg Ohio 43551 (US); Demers, Brian J., Rossford Ohio 43480 (US)
(74) Representative: Lawrence, John

(57) **Abstract**

A cookware lid (1) has upper (6) and lower holes (8) provided on a recessed, sloping surface (15). The lower end of the recessed surface (15) provides a reservoir (18) to receive and drain liquid. The upper holes (6) allow steam and foam to escape a vessel (25), condense and run down the sloping surface (15) into the reservoir (18) and back into a vessel (25), avoiding boil over during cooking. The lid (1) may also include a locking mechanism (4) to attach to a vessel (25) so as to further avoid boil over and also permit straining.

## Description

### Cross-Reference To Related Application

This application is a non-provisional of provisional application No. 60/461,138, filed April 9, 2003, incorporated herein by reference in its entirety.

### Field of the Invention

The present invention relates to a lid for cookware, and more particularly, a cookware lid that avoids boil over during cooking and that can also be used to strain the contents of a cooking vessel. It also relates to cookware comprising a vessel and lid that avoid boil over and can be used for straining.

### Background of the Invention

"Boil over" is a problem that is often encountered during cooking. Boil over occurs when the contents of a pan or other cookware boils over the rim of the vessel. It commonly occurs, for example, during boiling of grains, such as oatmeal or rice, which form foam that tends to rise and overflow the cooking vessel.

Boil over is a nuisance. It typically dirties the stovetop and may also extinguish pilot lights. More seriously, boil over may contribute to injury by increasing the likelihood that a cook will come into contact with the hot substance as it spills over the rim of the vessel or as the cook attempts to clean the spillage.

Attempts have been made previously to avoid boil over. For example, U.S. Patent No. 504,243 discloses a cover having an opening formed in its center. This center opening provides an exit for boiling liquids. The cover also includes an annular depression just inside the rim having a series of apertures disposed symmetrically around the surface of the cover, so that liquid that exits the vessel through the central opening will run down to the depression and fall back into the vessel through the lower apertures provided near the wall of the vessel. The lower apertures have a combined area that is considerably greater than that of the central opening.

U.S. Patent No. 1,039,140 recognizes that boiling liquid generally rises along the sides of a vessel, and discloses a cover in which upper holes are provided near the rim of the cover, along the perimeter of a annular depression. Lower holes are provided at the bottom of the depression to drain liquid that exits the vessel through the upper holes. The upper and lower holes are disposed symmetrically along the annular depression. This patent indicates that the disclosed configuration maintains circulation of the boiling liquid without run-off or generation of sufficient force to lift the cover off the vessel. It also discloses that the lower holes should not be appreciably smaller in area than the upper holes providing upper holes for boiling liquid to exit from a vessel.

Other attempts to address boil over using vents or apertures provided symmetrically along the periphery of a cover include U.S. Patent Nos. 1,461,366 and 3,598,105.

More recently, lids have been introduced to facilitate straining solid food cooked in liquid in a cookware vessel. One such lid has a dome shape surface provided with sets of apertures. The lid is configured to be fastened securely to a vessel, such as a pot, so that the contents of the pot may be more readily strained by tilting the pot and draining the liquid through the apertures on the lid after cooking. During cooking however, it has been recommended to keep the lid on loosely or removed entirely to avoid boil over. Apart from being susceptible to boil over, one drawback to this configuration is that the contents of the vessel tend to fall against the openings in the lid and block or impede the passage of liquid from the vessel during straining. Additionally, while the openings in the lid provide a vent for steam to escape the vessel during cooking, the holes are disposed above the rim of the vessel, and no separate return path is provided through which condensed liquid may return to the vessel.

### Summary of the Invention

The present invention addresses boil over using a unique configuration in which a plurality of upper holes are provided on the upper portion of a recessed, sloping surface and proximate to the periphery of the lid. The sloping surface forms a channel or path for liquid to drain down to a reservoir formed at its lower end. The recessed portion includes a set of lower holes in the reservoir that allow condensed liquid to drain back into the vessel. This continues as a cycle during cooking, and effectively prevents boil over.

According to one aspect of the invention, the lower holes may have diameters that are smaller than those of the upper holes.

According to another aspect, one or more additional sets of holes may be provided in or along the recessed portion, above the level of the lower holes.

According to another aspect, the lid may include a lock that engages a cooking vessel, thereby providing a sealed connection that prevents the lid from being lifted by steam and permitting contents of the vessel to boil over rim of the vessel and prevents the contents of the vessel to escape during straining.

According to another embodiment, cookware comprises a lid as described above in combination with a cookware vessel configured to receive such lid. A locking mechanism, attaches and seals the lid to the vessel.

Other aspects, features and advantages of the invention are apparent from the detailed description of preferred embodiments set forth below.

### Brief Description of the Drawings

In the drawings:

Fig. 1 is perspective view of a cookware according to a preferred embodiment of the invention.

Fig. 2 is a top view of a cookware lid according to a first embodiment of the invention.

Fig. 3 is a bottom view of the cookware lid of Fig. 2.

Fig. 4 is a side view of the cookware lid shown of Fig. 2.

Fig. 5 is a top view of a cookware lid according to a second embodiment of the invention.

Fig. 6 is a bottom view of the cookware lid of Fig. 5.

Fig. 7 is a side view of the cookware lid of Fig. 5.

Fig. 8 is a top view of a cookware vessel according to an embodiment of the present invention.

Fig. 9 is a cross-sectional side view of the cookware vessel of Fig. 8.

Fig. 10 is an exploded view showing the locking mechanism for a lid and the vessel of Fig. 9.

### Description of the Invention

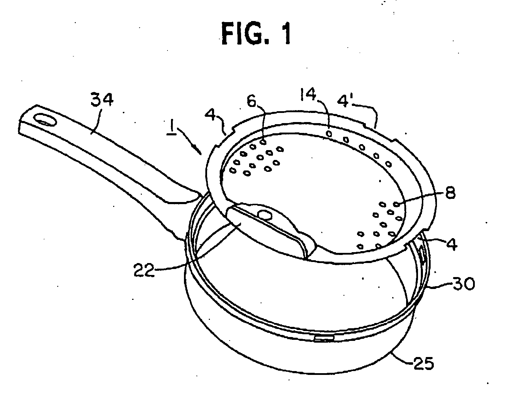

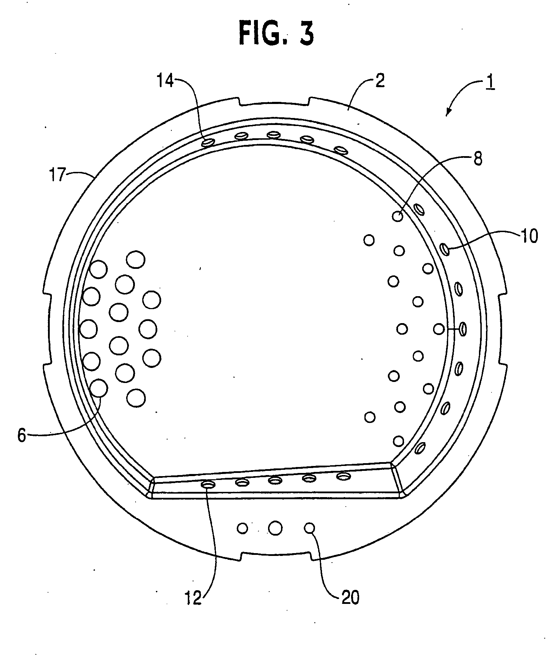

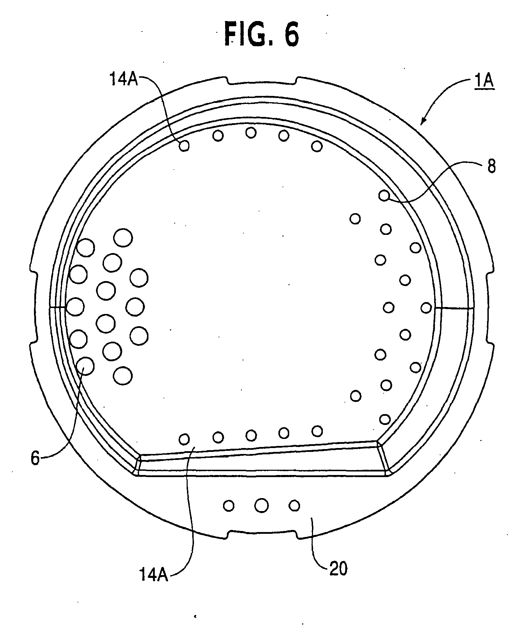

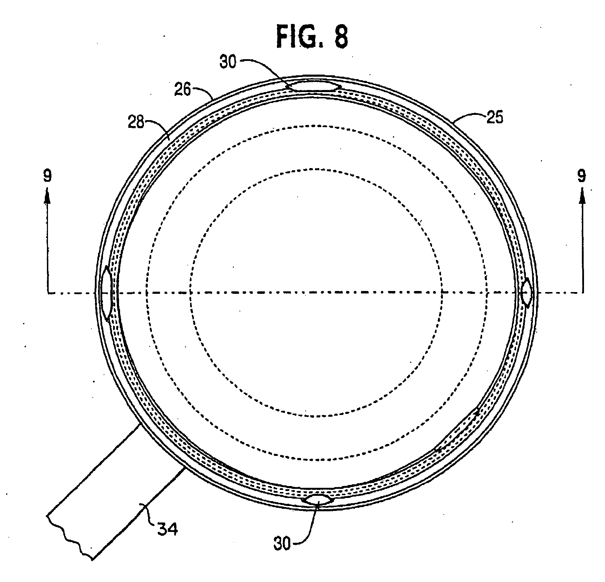

Exemplary embodiments of the invention are shown in the attached drawings, Figs. 1-10. It will be appreciated that this description is merely illustrative of the invention, and various modifications and alternatives will be possible.

Fig. 1 shows cookware comprising a cookware lid 1 and cookware vessel 25. The lid 1 has an outer rim 2 that is configured to fit snugly within the top rim 26 of the vessel 25 and rest on a ledge 28 that is formed within the rim 26. As described in greater detail below, in this particular embodiment, the lid 1 has cut-outs or indents 4 formed along the outer periphery of the lid rim 26, which mate corresponding tabs 30 formed along the rim of the vessel 25. This allows the lid 1 to be received on the vessel 25 and rotated to lock in place and establish a seal between the lid 1 and the vessel 25.

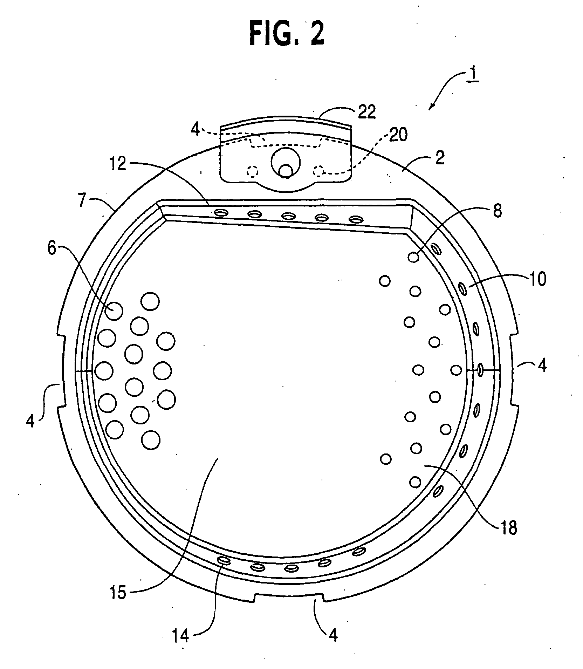

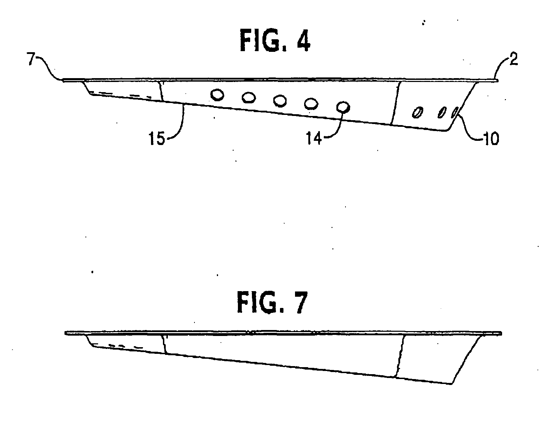

Figs. 2-4 illustrate the lid 1 in greater detail. In this example, the rim 2 forms an annular, upper planar surface. The inner surface of the lid 1 (formed within the rim 2) is recessed, and forms a sloped surface 15, as best seen in Fig. 4, which extends below the plane of the rim 2. The sloped surface 15 extends from one side of the recessed surface to the other. A set of upper holes 6 are provided at the upper end of the sloped surface 15. The sloped surface 15 leads down to an area that forms a reservoir 18. A set of lower holes 18 are provided at the reservoir that is formed at the lower end of the sloped surface 15. In this example, an additional set of side lower holes 10 are also formed on a side wall below the rim 2 proximate to the reservoir 18. In this example, the upper holes 6 are larger than the lower holes 8.

Shown in this example are respective sets of optional side holes 12, 14 formed in side surfaces of the lid 1, which surfaces are disposed between the sloped surface 15 and the rim 2. As noted below, these side holes 12, 14 are useful to achieve proper "cycling" of condensed liquid that exits the vessel and drains down the sloped surface 15 so as to collect in the reservoir 18 and drain back into the vessel. They also facilitate straining. The side holes 12, 14 may not be necessary in all cases, particularly if the collective area of the upper holes 6 is sufficient.

As shown, all holes are provided within the recessed area, below the rim 2 of the lid. It will also be appreciated that each of the upper holes 6 and lower holes 18 are each positioned asymmetrically relative to the center of the lid 1; that is, the upper holes 6 are disposed on one side of the surface of the lid, at the upper end of the sloped surface 15, while the lower holes 18 are disposed on the other side of the surface of the lid at the lower end of the sloped surface 1. In this example, the upper holes 6 have a total cross-sectional area that is greater than that of the lower holes 18.

Also shown in this example are apertures 20 formed at a wider portion of the rim 2, for attachment of a handle 22 to the lid 1. These apertures are configured to receive appropriate fasteners to attach the handle 22 according to techniques conventional in the art.

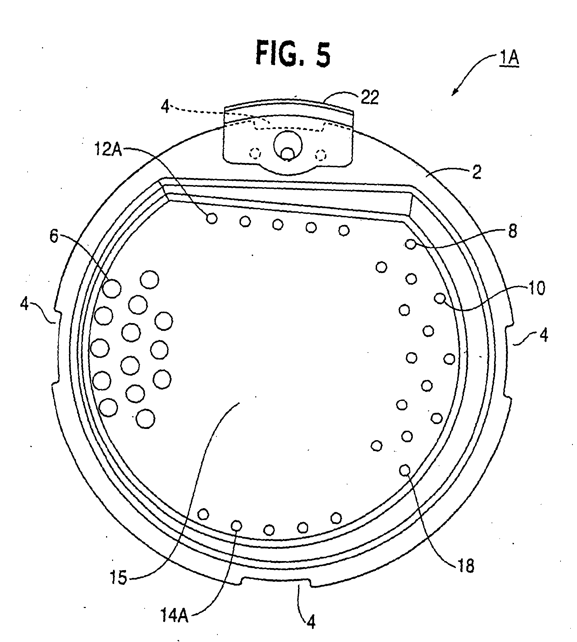

Figs. 5-7 show a embodiment of a lid 1A according to an alternative embodiment. This embodiment is the same in all respects as lid 1, except the sets of side holes 12, 14 are replaced with sets of side holes 12A, 14A formed on respective side portions of the sloped surface 15. Further the lower side holes 10 are omitted. This construction avoids the need for an additional manufacturing step that would otherwise be required to form holes 12, 14 and 10, and thus lowers costs.

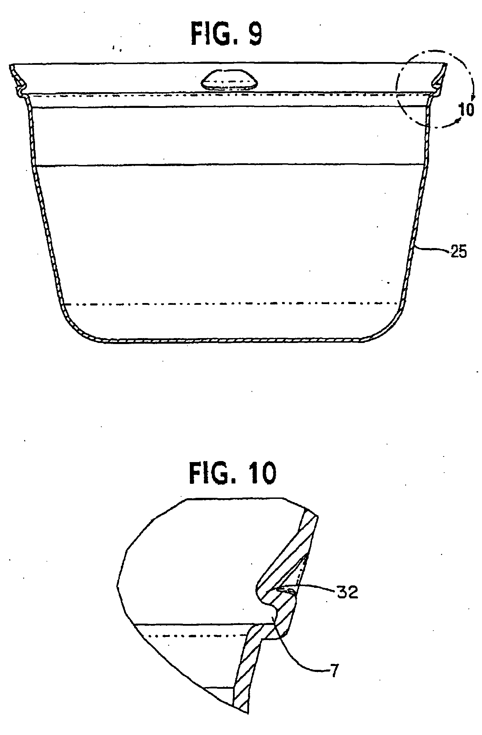

Figs. 8 and 9 shows a vessel 25 having handles 34. The rim of the vessel 26 is recessed to from a ledge 28, which is configured to receive the rim of the lid 1 described above. Also shown are tabs 30 that are configured to mate with cut-out portions 4 of the lid 1 so that the lid may be attached to the vessel 10.

Fig. 10 is an exploded view, which more clearly illustrates a locking mechanism for attaching the lid 1 to the vessel 25. As shown the edge 7 of the lid 1 is received within a recess formed by an annular lip 32 that extends around the inner rim of the vessel 25. This serves to seal the lid onto the vessel along the rim.

In use, the liquid and food to be cooked are added to the vessel 25. The lid 1 is attached to the vessel 25 by matching the recesses on the lid to the tabs on the vessel 25. The lid is then rotated within the recess formed by the annular lip 30, establishing a sealed connection between the lid 1 and the vessel 25. The cooking vessel is then heated to cook the contents of the vessel. As the liquid boils, steam and foam begin to rise in the vessel, particularly along the inner sides of the vessel. The steam and foam exit the interior of the vessel through the upper holes 20, and to a lesser extent, through optional side holes 14, and 16. The steam and foam rapidly cools and condenses. Condensed liquid then runs down the sloped surface 15 of the lid 1 into the reservoir 18, where it drains through lower holes 8 and optional lower side holes 10 back into the drain. The liquid then is re-heated until boiling within the vessel and the cycle repeats.

After the food is cooked, the lid may be removed by rotating the lid in the opposite direction and lifting it upward with the lid handle. Alternatively, the lid may remain attached and may be used to strain the cooking liquid from the contents of the food. The lid is advantageously configured to avoid blockage of the holes with food as it is strained. In this regard, the sloping recessed lower surface of the lid serves to block the food from obstructing the holes.

Through experimentation, it has been found that the above-described configuration provides superior results. It effectively prevents boil over while maintaining a continuous cycling. In contrast with certain prior boil over lids, the preferred embodiment utilizes upper holes that are provided at opposing portions of the upper surface of the lid with respect to the lower holes. Further, it has been found that the use of larger upper holes provides unexpectedly good results. It is also believed that boil over is facilitated by providing the holes (both upper and lower) in a recess portion that extends below the upper plane defined by the rim of the lid.

The use of a mechanism to lock down and seal the lid also has been found to significantly enhance performance and avoid boil over. As noted above, the lock down lid also facilitates use of the lid as a strainer.

It will be appreciated that the cookware and lid may be made from a variety of materials using various techniques known in the art. Preferably, a cookware lid according to the invention is constructed from sheet metal. An advantage of using sheet metal is that it is easy to stamp into shape. However, other materials may be used.

Alternative materials include, but is not limited to, stainless steel, titanium, carbon steel, ABS, Nylon, rubber, polyurethane, other plastics, or silicone. Again, the ideal properties of the material is a high heat tolerance and a low thermal conductivity. The cover should maintain heat in the pan yet allow only an adequate amount of energy to escape to prevent boil over. Preferably, the material used has a high heat tolerance and a low thermal conductivity. Such characteristics allow a pool of substances that have boiled over to cool and condense relatively quickly and drain back into the vessel.

As noted above, upper holes are preferably larger than the lower holes so as to drive the cycle of boiling substances out the highest point on the lid and drain back through at the lowest point. It has been found that bigger upper holes decrease pressure and reduce the velocity of the substances that exit the lid. The size of the upper holes may be varied, particularly in relation to the overall size of the lid and vessel to which it is attached and the overall surface of the lower holes.

Preferably, the reservoir is sloped so that the water will drain back into the pan and out of the reservoir quickly enough to avoid boil over but slowly enough to permit cooling. Again, however, the specific slope may be modified depending on the size of the holes and size of the lid and vessel. Also preferably, the reservoir is as large as possible without compromising the capacity of the pan.

As set forth above, the lid is secured to the cooking vessel to prevent the lid from lifting off the vessel and allowing contents to boil over the rim. On the other hand, it may be preferred not to seal the lid so securely as to absolutely prevent the steam or other substances to exit the vessel, which might cause pressure to build up and increase the velocity of substances exiting the vessel into the reservoir. Such velocity is undesirable when it causes the contents of vessel that boils over to spit out or to splatter, rather than smoothly running out the opening.

While one particular locking mechanism that has been found advantageous is described above, it will be apparent that other means may be provided to lock down and seal the lid to the extent required for the desired use.

Other modifications, advantages and features of the invention will be apparent to those skilled in the art without departing from the spirit and scope of the invention.

## Claims

1. A cookware lid comprising an upper rim surrounding a recessed portion, the recess portion including a sloped surface wherein at least one set of upper holes are provided at an upper end of the sloped surface and at least one set of lower holes are provided at a lower end of the sloped surface, the sloped surface and rim defining a reservoir configured to receive liquid that runs down the slope surface and drain said liquid through said lower holes.

2. The cookware lid according to claim 1, wherein the recessed portion is disposed below a plane defined by said upper rim.

3. The cookware lid according to claim 1 or claim 2, wherein each of said upper holes and said lower holes are positioned asymmetrically with respect to the center of the lid.

4. The cookware lid according to any preceding claim, wherein the upper holes and the lower holes are positioned on respective, opposing side portions of the surface of the lid, whereby condensed liquid may flow from one side portion to another.

5. The cookware lid according to any preceding claim, wherein the upper holes are disposed proximate the rim.

6. The cookware lid according to any preceding claim, wherein the upper holes have larger diameters than the lower holes.

7. The cookware lid according to any preceding claim, wherein the set of upper holes have a greater total cross-sectional area than the set of lower holes.

8. The cookware lid according to any preceding claim, further comprising at least one set of side holes disposed at side portions of the sloped surface.

9. The cookware lid according to any preceding claim, further comprising a locking mechanism to secure the lid to a cookware vessel.

10. The cookware lid according to claim 9, wherein the locking mechanism comprises indents formed on the periphery of the rim, said indents configured to mate with matching tabs provided on a cookware vessel.

11. The cookware lid according to any preceding claim, wherein the upper rim is configured to rest on an inner ledge of a cookware vessel, whereby the upper and lower holes are disposed below said ledge.

12. Cookware comprising:
a vessel;
a lid having an upper rim surrounding a recessed portion, the recess portion including a sloped surface wherein at least one set of upper holes are provided at an upper end of the sloped surface and at least one set of lower holes are provided at a lower end of the sloped surface, the sloped surface and rim defining a reservoir configured to receive liquid that runs down the slope surface and drain said liquid through said lower holes; and
a locking mechanism to attach the lid to the vessel.

13. Cookware according to claim 12, wherein the recesses are formed in the rim of the lid, said recesses having sizes that correspond to a corresponding set of tabs provided at the rim of the vessel, and the vessel rim includes an annular lip that forms a recess to receive the edge of the lid.
